# EUROPEAN PATENT SPECIFICATION

(11) **EP 1 733 786 B1**
(45) Date of publication and mention of the grant of the patent: **14.04.2010**
(21) Application number: 06014856.6
(22) Date of filing: 04.02.2000
(51) Int. Cl.: B01J 21/06, B01J 21/08, B01J 21/12, B01J 31/02, B01J 31/06, B05D 7/00, B32B 5/16, C07F 5/06, C07F 7/02, C08F 4/00, B01J 20/10, B01J 20/22

(54) **POROUS HYBRID PARTICLES FOR CHROMATOGRAPHIC SEPARATIONS**
PORÖSE HYBRIDPARTIKEL ZUR CHROMATOGRAPHISCHEN TRENNUNG
PARTICULES HYBRIDES POREUSES POUR LA SEPARATION EN CHROMATOGRAPHIE

(30) Priority: 05.02.1999 US 244795
(43) Date of publication of application: 20.12.2006
(62) Divisional of application: 00907186.1
(73) Proprietor: Waters Technologies Corporation, Milford, MA 01757 (US)
(72) Inventor: Fisk, Raymond P., Norton, MA 02766 (US); Walter, Thomas H., Ashland, MA 01721 (US); Zhiping, Jiang, Westford, MA 01886 (US)
(74) Representative: Schnappauf, Georg

(56) References cited:
- US-A- 4 017 528
- US-A- 4 724 207
- US-A- 5 378 790
- US-A- 5 565 142
- US-A- 5 637 135
- US-A- 5 856 379
- US-A- 5 965 202

## Description

### BACKGROUND OF THE INVENTION

Packing materials for liquid chromatography (LC) are generally classified into two types: organic or polymeric carriers, e.g., polystyrene polymers; and inorganic carriers typified by silica gel. The polymeric materials are chemically stable against alkaline and acidic mobile phases; therefore, the pH range of the eluant used with polymeric chromatographic materials is wide, compared with the silica carriers. However, polymeric chromatographic materials generally result in polymeric columns with low efficiency, leading to inadequate separation performance, particularly with low molecular-weight analytes. Furthermore, polymeric chromatographic materials shrink and swell upon solvent changeover in the eluting solution.

On the other hand, silica gel-based chromatographic devices, e.g., HPLC columns, are most commonly used. The most common applications employ a silica which has been surface-derivatized with an organic functional group such as octadecyl (C₁₈), octyl (C₈), phenyl, amino, cyano group, etc. As a stationary phase for HPLC, these packing materials result in columns with high theoretical plate number/high efficiency, and do not evidence shrinking or swelling. Silica gel is characterized by the presence of silanol groups on its surface. During a typical derivatization process such as reaction with octadecyldimethylchlorosilane, at least 50% of the surface silanol groups remain unreacted. These residual, or free, silanol groups interact with basic and acidic analytes via ion exchange, hydrogen bonding and dipole/dipole mechanisms. The free silanol groups create problems including increased retention, excessive peak tailing and irreversible adsorption of the sample. The other drawback with silica-based columns is their limited hydrolytic stability. First, the incomplete derivatization of the silica gel leaves a bare silica surface which can be readily dissolved under alkaline conditions, generally pH > 8.0, leading to the subsequent collapse of the chromatographic bed. Secondly, the bonded phase can be stripped off of the surface under acidic conditions, generally pH < 2.0, and eluted off the column by the mobile phase, causing loss of analyte retention, and an increase in the concentration of surface silanol groups.

To overcome the problems of free silanol group activity and hydrolytic instability of silica-based stationary phases, many methods have been tried including use of ultrapure silica, carbonized silica, coating of the silica surface with polymeric materials, endcapping free silanol groups with a short-chain reagent such as trimethylsilane, and the addition of suppressors such as amines to the eluant. These approaches have not proven to be completely satisfactory in practice.

One approach which has been taken is disclosed in U. S. Patent No. 4,017,528. A process for preparing a "hybrid" silica is described wherein an alkyl functionality is coupled into both the skeleton structure and the surface of the silica. According to the '528 patent, the hybrid silica can be prepared by two methods. In the first method, a mixture of tetraethoxysilane (TEOS) and an alkyltriethoxysilane is cohydrolyzed in the presence of an acid catalyst to form a liquid material containing polyalkylethoxysiloxane (PAS) oligomers. Then, the PAS is suspended in an aqueous medium and gelled into porous particles in the presence of a base catalyst. In the second method, the material is prepared by a procedure similar to that described in the first method except that the suspension droplet is a mixture of alkyltriethoxysilane and polyethoxysiloxane (PES) oligomers; the latter is prepared by partial hydrolysis of TEOS.

Some problems have been associated with the '528 hybrid material. First, these hybrid materials contain a lot of micropores,.i.e., pores having a diameter below 30 Å. It is known that such micropores inhibit solute mass transfer, resulting in poor peak shape and band broadening. Secondly, the pore structure of the '528 hybrid material is formed due to the presence of ethanol (a side product of the gelation process) within the suspension droplets during gelation, and serving as a porogen. The pore volume is controlled by the molecular weight of the PAS or PES, i.e., the degree of crosslinking. The lower the molecular weight or the lower the crosslinking degree of the PAS or PES, the more ethanol is generated by the gelation reaction and subsequently a larger pore volume is produced. However, part of the ethanol generated within the droplets of the suspension during the gelation is able to diffuse into the aqueous phase by partition. If the amount of the ethanol generated within the suspension droplets is too great, the partition of the ethanol will cause the structure of the droplets to collapse, forming irregularly-shaped particles. Therefore, the strategy to control the pore volume of the hybrid material described in the disclosure has certain limitations, particularly for preparing hybrid material where pore volume > 0.8 cc/g is required. Thirdly, the '528 hybrid material contains "shell-shaped" particles, which have undesirable chromatographic properties, including weak mechanical strength to poor mass transfer properties for solute molecules. This is a consequence of the gelation mechanism, where the base catalysts first react near the surface of the PAS droplet, forming a "skinned" layer of material having very small pores. Further gelation is then limited by the diffusion of catalyst through this layer towards the droplet center, leading to particles having "shell-shaped" pore morphology.

US 5,565,142 discloses porous xerogels in the form of inorganic metal oxide gels, such as silica gel, inorganic-organic composite gels, or organic gels, treated in the wet state before drying with a suitable surface modification compound.

US 5,637,135 describes film forming sol-gel materials, which are coated upon solid supports to create chromatographic stationary phases wherein a mixture of organoalkoxysilanes and monomeric alkoxysilanes containing hydrolyzable groups is hydrolyzed and co-polymerized or co-condensed to the point where the sol-gel product will form films.

### SUMMARY OF THE INVENTION

The present disclosure relates to a novel material for chromatographic separations, processes for its preparation, and separations devices containing the chromatographic material. In particular, the present invention provides a porous hybrid material comprising porous hybrid particles obtainable by a method comprising the steps of:
a) prepolymerizing an organoalkoxysilane and a tetraalkoxysilane to produce a polyorganoalkoxysiloxane;
b) preparing an aqueous surfactant-containing suspension of the polyorganoalkoxysiloxane;
c) gelling the suspension in the presence of a base catalyst so as to produce porous particles; and
d) modifying the pore structure of the porous particles by hydrothermal treatment; wherein the porous hybrid particles have the formula SiO₂/(R²ₚR⁴_{q}SiOₜ)ₙ or SiO₂/[R⁶(R²ᵣSiOₜ)ₘ]ₙ, wherein R² and R⁴ are independently C₁ - C₁₈ alkyl or aryl moiety, which may additionally be substituted with alkyl, aryl, cyano, amino, diol, nitro, and ion exchange or embedded polar functionalities, R⁶ is a substituted or unsubstituted C₁ - C₁₈ alkylene, alkenylene, alkynylene or arylene moiety bridging two or more silicon atoms, p and q are 0, 1 or 2, provided that p + q = 1 or 2, and that when p + q = 1, t = 1.5, and when p + q = 2, t = 1; r is 0 or 1, provided that when r = 0, t = 1.5, and when r = 1, t = 1; m is an integer greater than or equal to 2, and n is a number from 0.1 to 1.

In a preferred embodiment, the tetraalkoxysilane has the formula Si(OR¹)₄, where R¹ is a C₁ - C₃ alkyl moiety. More preferably, the tetraalkoxysilane is selected from the group consisting of tetramethoxysilane and tetraethoxysilane.

Preferably, the organoalkoxysilane has the formula R²Si(OR¹)₃ or R⁶[Si(OR¹)₃]ₘ where R² is a C₁ - C₁₈ aliphatic or aromatic moiety, R¹ is a C₁ - C₄ alkyl moiety, R⁶ is a C₁ - C₁₈ alkylene, alkenylene, alkynylene or arylene moiety bridging two or more silicon atoms, and m is an integer greater than or equal to two. In one embodiment, R² is methyl, ethyl or phenyl, and R¹ is ethyl, or R⁶ is a bridging ethylene group, m = 2, and R¹ is ethyl.

This new type of packing material is chemically stable, does not have undesirable pore geometries, and shows excellent separation performance.

In an embodiment, the particles are surface modified with a surface modifier having the formula Zₐ(R')_{b}Si-R, where Z = CI, Br, I, C₁ - C₅ alkoxy, dialkylamino, e.g., dimethylamino or trifluoromethanesulfonate; a and b are each an integer from 0 to 3 provided that a + b = 3; R' is a C₁ - C₆ straight, cyclic or branched alkyl group, and R is a functionalizing group. R' may be, e.g., methyl, ethyl, propyl, isopropyl, butyl, t-butyl, sec-butyl, pentyl, isopentyl, hexyl or cyclohexyl; preferably, R' is methyl. The functionalizing group R may include alkyl, aryl, cyano, amino, diol, nitro, cation or anion exchange groups, or embedded polar functionalities. Examples of suitable R functionalizing groups include C₁-C₂₀ alkyl such as octyl (C₈) and octadecyl (C₁₈); alkaryl, e.g., C₁-C₄-phenyl; cyanoalkyl groups, e.g., cyanopropyl; diol groups, e.g., propyldiol; amino groups, e.g., dialkylamino such as aminopropyl; and embedded polar functionalities, e.g., carbamate functionalities such as disclosed in U. S. Patent No. 5,374,755,. Such groups include those of the general formula 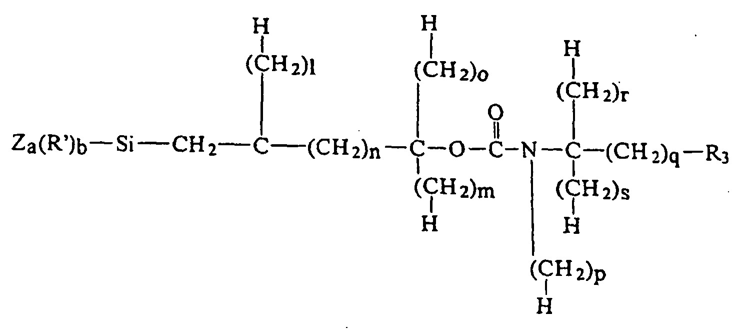 wherein 1, m, o, r, and s are 0 or 1, n is 0, 1, 2 or 3, p is 0, 1, 2, 3 or 4, and q is an integer from 0 to 19; R₃ is selected from the group consisting of hydrogen, alkyl, cyano and phenyl; and Z, R', a and b are defined as above. Preferably, the carbamate functionality has the general structure indicated below: 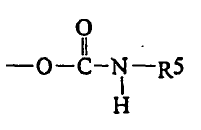 wherein R⁵ may be, e.g., cyanoalkyl, t-butyl, butyl, octyl, dodecyl, tetradecyl, octadecyl, or benzyl. Advantageously, R⁵ is octyl or octadecyl. In a preferred embodiment, the surface modifier may be a halopolyorganosilane, such as octyldimethylchlorosilane or octadecyldimethylchlorosilane. In another embodiment, the particles are surface modified by polymer coating.

In methods of preparing porous particles, porous hybrid silica particles are formed and the pore structure of the porous particles is modified to form hybrid silica particles having a chromatographically-enhancing pore geometry. In a preferred embodiment, the particles are ellipsoidal, e.g., ovoid or spherical, more preferably spherical. In an advantageous embodiment, the prepolymerization step comprises hydrolyzing and condensing a mixture of an organotrialkoxysilane and a tetraalkoxysilane in the presence of an acid catalyst to produce the polyorganoalkoxysiloxane.

In yet another aspect, the present disclosure relates to separation devices such as chromatographic columns, sample cleanup devices, e.g., solid phase extraction columns, thin layer chromatographic (TLC) plates, filtration membranes, microtiter plates, and the like having a stationary phase which includes the porous hybrid material of the present invention. The stationary phase may be introduced by packing, coating, impregnation, etc., depending on the requirements of the particular device. In a particularly advantageous embodiment, the chromatographic device is a packed chromatographic column such as that used for HPLC.

In yet another aspect the disclosure relates to chromatographic columns having improved life which comprise a column having a cylindrical interior for accepting a packing material, and a packed chromatographic bed comprising porous particles of hybrid silica of the formula SiO₂/(R²ₚR⁴_{q}SiOₜ)ₙ or SiO₂/[R⁶(R²ᵣSiOₜ)ₘ]ₙ wherein R² and R⁴ are independently C₁ - C₁₈ alkyl or aryl moiety (which may additionally be substituted with alkyl, aryl, cyano, amino, diol, nitro, and ion exchange or embedded polar functionalities), R⁶ is a substituted or unsubstituted C₁ - C₁₈ alkylene, alkenylene, alkynylene or arylene moiety bridging two or more silicon atoms, p and q are 0, 1 or 2, provided that p + q = 1 or 2, and that when p + q = 1, t = 1.5, and when p + q = 2, t = 1; r is 0 or 1, provided that when r = 0, t = 1.5, and when r = 1, t = 1; m is an integer greater than or equal to 2, and n is a number from 0.1 to 1, more preferably 0.2 to 0.5, wherein porous particles of hybrid silica are surface modified and have an average pore diameter of from about 100 to 300 Å.

### DETAILS OF THE INVENTION

The present invention will be more fully illustrated by reference to the definitions set forth below.

The language "chromatographically-enhancing pore geometry" includes the geometry of the pore configuration of the presently-disclosed porous hybrid particles, which has been found to enhance the chromatographic separation ability of the material, e.g., as distinguished from other chromatographic media in the art. For example, a geometry can be formed, selected or constructed, and various properties and/or factors can be used to determine whether the chromatographic separations ability of the material has been "enhanced", e.g., as compared to a geometry known or conventionally used in the art. Examples of these factors include high separation efficiency, longer column life, and high mass transfer properties (as evidenced by, e.g., reduced band spreading and good peak shape.) These properties can be measured or observed using art-recognized techniques. For example, the chromatographically-enhancing pore geometry of the present porous hybrid particles is distinguished from the prior art particles by the absence of "ink bottle" or "shell shaped" pore geometry or morphology, both of which are undesirable because they, e.g., reduce mass transfer rates, leading to lower efficiencies.

"Hybrid", i.e., as in "porous hybrid particles" includes inorganic-based structures wherein an organic functionality is integral to both the internal or "skeletal" inorganic structure as well as the hybrid material surface. The inorganic portion of the hybrid material is silica. As noted before, exemplary hybrid materials are shown in U. S. Patent No. 4,017,528.. "Hybrid silica" refers to a material having the formula SiO₂/(R²ₚR⁴_{q}SiOₜ)ₙ or SiO₂/[R⁶(R²ᵣSiOₜ)ₘ]ₙ wherein R² and R⁴ are independently C₁ - C₁₈ alkyl or aryl moiety (which may additionally be substituted with alkyl, aryl, cyano, amino, diol, nitro, and ion exchange or embedded polar functionalities), R⁶ is a substituted or unsubstituted C₁ - C₁₈ alkylene, alkenylene, alkynylene or arylene moiety bridging two or more silicon atoms, p and q are 0, 1 or 2, provided that p+q = 1 or 2, and that when p+q=1, t=1.5, and when p+q=2, t=1; r is 0 or 1, provided that when r = 0, t = 1.5, and when r = 1, t = 1; m is an integer greater than or equal to 2, and n is a number from 0.1 to 1, more preferably 0.2 to 0.5. R² may be additionally substituted with a functionalizing group R.

"Functionalizing group" includes (typically) organic functional groups which impart a certain chromatographic functionality to a chromatographic stationary phase, including, e.g., octadecyl (C₁₈), phenyl, ion exchange, etc. Such functionalizing groups are present in, e.g., surface modifiers such as disclosed herein which are attached to the base material, e.g., via derivatization or coating and later crosslinking, imparting the chemical character of the surface modifier to the base material. In an embodiment, such surface modifiers have the formula Zₐ(R')_{b}Si-R, where Z = Cl, Br, I, C₁ - C₅ alkoxy, dialkylamino, e.g., dimethylamino or trifluoromethanesulfonate; a and b are each an integer from 0 to 3 provided that a + b = 3; R' is a C₁ - C₆ straight, cyclic or branched alkyl group, and R is a functionalizing group. R' may be, e.g., methyl, ethyl, propyl, isopropyl, butyl, t-butyl, sec-butyl, pentyl, isopentyl, hexyl or cyclohexyl; preferably, R' is methyl.

The functionalizing group R may include alkyl, aryl, cyano, amino, diol, nitro, cation or anion exchange groups, or embedded polar functionalities. Examples of suitable R functionalizing groups include C₁-C₂₀ alkyl such as octyl (C₈) and octadecyl (C₁₈); alkaryl, e.g., C₁-C₄-phenyl; cyanoalkyl groups, e.g., cyanopropyl; diol groups, e.g., propyldiol; amino groups, e.g., aminopropyl; and embedded polar functionalities, e.g., carbamate functionalities such as disclosed in U. S. Patent No. 5,374,755. In a preferred embodiment, the surface modifier may be a halopolyorganosilane, such as octyldimethylchlorosilane or octadecyldimethylchlorosilane. Embedded polar functionalities include carbamate functionalities such as disclosed in U. S. Patent No. 5,374,755. Such groups include those of the general formula 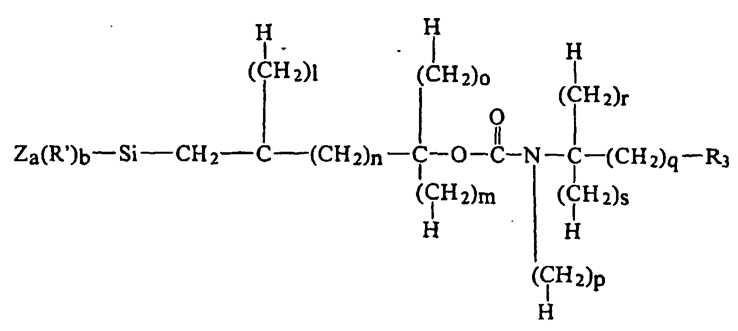 wherein 1, m, o, r, and s are 0 or 1, n is 0, 1, 2 or 3 p is 0, 1, 2, 3 or 4 and q is an integer from 0 to 19; R₃ is selected from the group consisting of hydrogen, alkyl, cyano and phenyl; and Z, R', a and b are defined as above. Preferably, the carbamate functionality has the general structure indicated below: 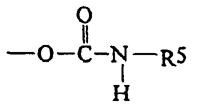 wherein R⁵ may be, e.g., cyanoalkyl, t-butyl, butyl, octyl, dodecyl, tetradecyl, octadecyl, or benzyl. Advantageously, R⁵ is octyl or octadecyl. In a preferred embodiment, the surface modifier may be a halopolyorganosilane, such as octyldimethylchlorosilane or octadecyldimethylchlorosilane. In another embodiment, the particles are surface modified by polymer coating.

The term "aliphatic group" includes organic compounds characterized by straight or branched chains, typically having between 1 and 22 carbon atoms. Aliphatic groups include alkyl groups, alkenyl groups and alkynyl groups. In complex structures, the chains can be branched or cross-linked. Alkyl groups include saturated hydrocarbons having one or more carbon atoms, including straight-chain alkyl groups and branched-chain alkyl groups. Such hydrocarbon moieties may be substituted on one or more carbons with, for example, a halogen, a hydroxyl, a thiol, an amino, an alkoxy, an alkylcarboxy, an alkylthio, or a nitro group. Unless the number of carbons is otherwise specified, "lower aliphatic" as used herein means an aliphatic group, as defined above (e.g., lower alkyl, lower alkenyl, lower alkynyl), but having from one to six carbon atoms. Representative of such lower aliphatic groups, e.g., lower alkyl groups, are methyl, ethyl, n-propyl, isopropyl, 2-chloropropyl, n-butyl, sec-butyl, 2-aminobutyl, isobutyl, tert-butyl, 3-thiopentyl, and the like. As used herein, the term "nitro" means -NO₂; the term "halogen" designates -F, -Cl, -Br or -I; the term "thiol" means SH; and the term "hydroxyl" means -OH. Thus, the term "alkylamino" as used herein means an alkyl group, as defined above, having an amino group attached thereto. Suitable alkylamino groups include groups having 1 to about 12 carbon atoms, preferably from 1 to about 6 carbon atoms. The term "alkylthio" refers to an alkyl group, as defined above, having a sulfhydryl group attached thereto. Suitable alkylthio groups include groups having 1 to about 12 carbon atoms, preferably from 1 to about 6 carbon atoms. The term "alkylcarboxyl" as used herein means an alkyl group, as defined above, having a carboxyl group attached thereto. The term "alkoxy" as used herein means an alkyl group, as defined above, having an oxygen atom attached thereto. Representative alkoxy groups include groups having 1 to about 12 carbon atoms, preferably 1 to about 6 carbon atoms, e.g., methoxy, ethoxy, propoxy, tert-butoxy and the like. The terms "alkenyl" and "alkynyl" refer to unsaturated aliphatic groups analogous to alkyls, but which contain at least one double or triple bond respectively. Suitable alkenyl and alkynyl groups include groups having 2 to about 12 carbon atoms, preferably from 1 to about 6 carbon atoms.

The term "alicyclic group" includes closed ring structures of three or more carbon atoms. Alicyclic groups include cycloparaffins or naphthenes which are saturated cyclic hydrocarbons, cycloolefins which are unsaturated with two or more double bonds, and cycloacetylenes which have a triple bond. They do not include aromatic groups. Examples of cycloparaffins include cyclopropane, cyclohexane, and cyclopentane. Examples of cycloolefins include cyclopentadiene and cyclooctatetraene. Alicyclic groups also include fused ring structures and substituted alicyclic groups such as alkyl substituted alicyclic groups. In the instance of the alicyclics such substituents can further comprise a lower alkyl, a lower alkenyl, a lower alkoxy, a lower alkylthio, a lower alkylamino, a lower alkylcarboxyl, a nitro, a hydroxyl, -CF₃, -CN, or the like.

The term "heterocyclic group" includes closed ring structures in which one or more of the atoms in the ring is an element other than carbon, for example, nitrogen, sulfur, or oxygen. Heterocyclic groups can be saturated or unsaturated and heterocyclic groups such as pyrrole and furan can have aromatic character. They include fused ring structures such as quinoline and isoquinoline. Other examples of heterocyclic groups include pyridine and purine. Heterocyclic groups can also be substituted at one or more constituent atoms with, for example, a halogen, a lower alkyl, a lower alkenyl, a lower alkoxy, a lower alkylthio, a lower alkylamino, a lower alkylcarboxyl, a nitro, a hydroxyl, -CF₃, -CN, or the like. Suitable heteroaromatic and heteroalicyclic groups generally will have 1 to 3 separate or fused rings with 3 to about 8 members per ring and one or more N, O or S atoms, e.g. coumarinyl, quinolinyl, pyridyl, pyrazinyl, pyrimidyl, furyl, pyrrolyl, thienyl, thiazolyl, oxazolyl, imidazolyl, indolyl, benzofuranyl, benzothiazolyl, tetrahydrofuranyl, tetrahydropyranyl, piperidinyl, morpholino and pyrrolidinyl.

The term "aromatic group" includes unsaturated cyclic hydrocarbons containing one or more rings. Aromatic groups include 5-and 6-membered single-ring groups which may include from zero to four heteroatoms, for example, benzene, pyrrole, furan, thiophene, imidazole, oxazole, thiazole, triazole, pyrazole, pyridine, pyrazine, pyridazine and pyrimidine, and the like. The aromatic ring may be substituted at one or more ring positions with, for example, a halogen, a lower alkyl, a lower alkenyl, a lower alkoxy, a lower alkylthio, a lower alkylamino, a lower alkylcarboxyl, a nitro, a hydroxyl, -CF₃, -CN, or the like.

The term "alkyl" includes saturated aliphatic groups, including straight-chain alkyl groups, branched-chain alkyl groups, cycloalkyl (alicyclic) groups, alkyl substituted cycloalkyl groups, and cycloalkyl substituted alkyl groups. In preferred embodiments, a straight chain or branched chain alkyl has 20 or fewer carbon atoms in its backbone (e.g., C₁-C₂₀ for straight chain, C₃-C₂₀ for branched chain), and more preferably 12 or fewer. Likewise, preferred cycloalkyls have from 4-10 carbon atoms in their ring structure, and more preferably have 4-7 carbon atoms in the ring structure. The term "lower alkyl" refers to alkyl groups having from 1 to 6 carbons in the chain, and to cycloalkyls having from 3 to 6 carbons in the ring structure.

Moreover, the term "alkyl" (including "lower alkyl") as used throughout the specification and claims includes both "unsubstituted alkyls" and "substituted alkyls", the latter of which refers to alkyl moieties having substituents replacing a hydrogen on one or more carbons of the hydrocarbon backbone. Such substituents can include, for example, halogen, hydroxyl, alkylcarbonyloxy, arylcarbonyloxy, alkoxycarbonyloxy, aryloxycarbonyloxy, carboxylate, alkylcarbonyl, alkoxycarbonyl, aminocarbonyl, alkylthiocarbonyl, alkoxyl, phosphate, phosphonato, phosphinato, cyano, amino (including alkyl amino, dialkylamino, arylamino, diarylamino, and alkylarylamino), acylamino (including alkylcarbonylamino, arylcarbonylamino, carbamoyl and ureido), amidino, imino, sulfhydryl, alkylthio, arylthio, thiocarboxylate, sulfate, sulfonato, sulfamoyl, sulfonamido, nitro, trifluoromethyl, cyario, azido, heterocyclyl, aralkyl, or an aromatic or heteroaromatic moiety. It will be understood by those skilled in the art that the moieties substituted on the hydrocarbon chain can themselves be substituted, if appropriate. Cycloalkyls can be further substituted, e.g., with the substituents described above. An "aralkyl" moiety is an alkyl substituted with an aryl, e.g., having 1 to 3 separate or fused rings and from 6 to about 18 carbon ring atoms, (e.g., phenylmethyl (benzyl)).

The term "aryl" includes 5- and 6-membered single-ring aromatic groups that may include from zero to four heteroatoms, for example, unsubstituted or substituted benzene, pyrrole, furan, thiophene, imidazole, oxazole, thiazole, triazole, pyrazole, pyridine, pyrazine, pyridazine and pyrimidine, and the like. Aryl groups also include polycyclic fused aromatic groups such as naphthyl, quinolyl, indolyl, and the like. The aromatic ring can be substituted at one or more ring positions with such substituents, e.g., as described above for alkyl groups. Suitable aryl groups include unsubstituted and substituted phenyl groups. The term "aryloxy" as used herein means an aryl group, as defined above, having an oxygen atom attached thereto. The term "aralkoxy" as used herein means an aralkyl group, as defined above, having an oxygen atom attached thereto. Suitable aralkoxy groups have 1 to 3 separate or fused rings and from 6 to about 18 carbon ring atoms, e.g., O-benzyl.

The term "amino," as used herein, refers to an unsubstituted or substituted moiety of the formula -NRₐR_{b}, in which Rₐ and R_{b} are each independently hydrogen, alkyl, aryl, or heterocyclyl, or Rₐ and R_{b}, taken together with the nitrogen atom to which they are attached, form a cyclic moiety having from 3 to 8 atoms in the ring. Thus, the term "amino" includes cyclic amino moieties such as piperidinyl or pyrrolidinyl groups, unless otherwise stated. An "amino-substituted amino group" refers to an amino group in which at least one of Rₐ and R_{b}, is further substituted with an amino group.

The present porous hybrid particles generally have a mean particle size of 0.5 to 100 µm, preferably 1 to 50 µm, and most preferably 1 to 20 µm. The specific surface area, as measured by N₂ sorption analysis, is generally 50 to 800 m²/g, preferably 75 to 600 m²/g, most preferably 100 to 200 m²/g. The specific pore volume of the particles is generally 0.25 to 1.5 cm³/g, preferably 0.4 to 1.2 cm³/g, more preferably 0.5 to 1.0 cm³/g. The porous hybrid particles have an average pore diameter of generally 50 to 500 Å, preferably 60 to 500 Å, more preferably 100 to 300 Å.

Porous hybrid particles may be made as described below and in the specific instances illustrated in the Examples. Porous spherical particles of hybrid silica may, in a preferred embodiment, be prepared by a four-step process. In the first step, an organoalkoxysilane such as methyltriethoxysilane, and a tetraalkoxysilane such as tetraethoxysilane (TEOS) are prepolymerized to form a polyorganoalkoxysiloxane (PAS) by co-hydrolyzing a mixture of the two components in the presence of an acid catalyst. In the second step, the PAS is suspended in an aqueous medium in the presence of a surfactant and gelled into porous spherical particles of hybrid silica using a base catalyst. In the third step, the pore structure of the hybrid silica particles is modified by hydrothermal treatment, producing an intermediate hybrid silica product which may be used for particular purposes itself, or desirably may be further processed below. The above three steps of the process allow much better control of the particle morphology, pore volume and pore sizes than those described in the prior art, and thus provide a chromatographically-enhancing pore geometry.

In the fourth step, the remaining surface silanol groups of the hybrid silica are derivatized into organic functional groups, such as by reacting with a halopolyorganosilane such as octadecyldimethylchlorosilane. The surface of the thus-prepared material is then covered by the alkyl groups embedded during the gelation and the organic groups added during the derivatization process. The surface coverage by the overall organic groups is higher than in conventional silica-based packing materials, and subsequently the surface concentration of the remaining silanol group in the hybrid silica is smaller. The resulting material, used as a stationary phase for LC, shows excellent peak shape for base analytes, and better hydrolytic stability than other silica-based packing materials.

Where the prepolymerization step involves co-hydrolyzing a mixture of the two components in the presence of an acid catalyst, the content of the organoalkoxysilane can be varied, e.g., from 0.2 to 0.5 mole per mole of the tetraalkoxysilane. The amount of the water used for the hydrolysis can be varied, e.g., from 1.10 to 1.35 mole per mole of the silane. The silane, water and the ethanol mixture, in the form of a homogeneous solution, is stirred and heated to reflux under a flow of argon. After it is refluxed for a time sufficient to prepolymerize to form polyorganoalkoxysiloxane (PAS), the solvent and the side product, mainly ethanol, is distilled off from the reaction mixture. Thereafter, the residue is heated at an elevated temperature, e.g., in the range of 120 to 140°C under an atmosphere of argon for a period of time, e.g., 1.5 to 16 h. The residue is further heated at this temperature, e.g., for 1 to 3 h under reduced pressure, e.g., 10⁻²-10⁻³ torr, to remove any volatile species.

In the second step, the PAS is suspended into fine beads in a solution containing water and ethanol at 55°C by agitation. The volume percent of ethanol in the solution is varied from 10 to 20%. A non-ionic surfactant such as TRITON X-100 or TRITON X-45 is added into the suspension as the suspending agent. The surfactant, having a structure of alkylphenoxypolyethoxyethanol, is believed to be able to orient at the hydrophobic/hydrophilic interface between the PAS beads and the aqueous phase to stabilize the PAS beads. The surfactant is also believed to enhance the concentration of water and the base catalyst on the surface of the PAS beads during the gelation step, through its hydrophilic groups, which induces the gelling of the PAS beads from the surface towards the center. Use of the surfactant to modulate the surface structure of the PAS beads stabilizes the shape of the PAS beads throughout the gelling process, and minimizes or suppresses formation of particles having "shell-shaped" morphology.

It is also possible to suspend a solution containing PAS and toluene in the aqueous phase, instead of PAS alone. The toluene, which is insoluble in the aqueous phase, remains in the PAS beads during the gelation step and functions as a porogen. By controlling the relative amount of toluene in the PAS/toluene solution, the pore volume of the final hybrid silica can be more precisely controlled. This allows the preparation of hybrid silica particles having large pore volume, e.g., 0.8-1.2 cc/g.

The gelation step is initiated by adding the basic catalyst, e.g., ammonium hydroxide into the PAS suspension agitated at 55°C. Thereafter, the reaction mixture is agitated at the same temperature to drive the reaction to completion. Ammonium hydroxide is preferred because bases such as sodium hydroxide are a source of unwanted cations, and ammonium hydroxide is easier to remove in the washing step. The thus-prepared hybrid silica is filtered and washed with water and methanol free of ammonium ions, then dried.

The pore structure of the as-prepared hybrid material is modified by hydrothermal treatment, which enlarges the openings of the pores as well as the pore diameters, as confirmed by nitrogen (N₂) sorption analysis. The hydrothermal treatment is performed by preparing a slurry containing the as-prepared hybrid material and a solution of organic base in water, heating the slurry in an autoclave at an elevated temperature, e.g., 143 to 168°C, for a period of 6-to 28 h. The pH of the slurry is adjusted to be in the range of 8.0 to 9.0 using concentrated acetic acid. The concentration of the slurry is in the range of 1 g hybrid material per 4 to 10 ml of the base solution. The thus-treated hybrid material is filtered, and washed with water and acetone until the pH of the filtrate reaches 7, then dried at 100°C under reduced pressure for 16 h. The resultant hybrid materials show average pore diameters in the range of 100-300 Å.

The surface of hybrid silica prepared so far still contains silanol groups, which can be derivatized by reacting with a reactive organosilane. The surface derivatization of the hybrid silica is conducted according to standard methods, for example by reaction with octadecyldimethylchlorosilane in an organic solvent under reflux conditions. An organic solvent such as toluene is typically used for this reaction. An organic base such as pyridine or imidazole is added to the reaction mixture to catalyze the reaction. The thus-obtained product is then washed with water, toluene and acetone and dried at 100°C under reduced pressure for 16 h. The resultant hybrid silica can be further reacted with a short-chain silane such as trimethylchlorosilane to endcap the remaining silanol groups, by using a similar procedure described above.

The surface of the hybrid silica particles may also be surface modified with a surface modifier, e.g., Zₐ(R')_{b}Si-R, where Z = Cl, Br, I, C₁ - C₅ alkoxy, dialkylamino, e.g., dimethylamino or trifluoromethanesulfonate; a and b are each an integer from 0 to 3 provided that a + b = 3; R' is a C₁ - C₆ straight, cyclic or branched alkyl group, and R is a functionalizing group, and by polymer coating. R' may be, e.g., methyl, ethyl, propyl, isopropyl, butyl, t-butyl, sec-butyl, pentyl, isopentyl, hexyl or cyclohexyl; preferably, R' is methyl.

The functionalizing group R may include alkyl, aryl, cyano, amino, diol, nitro, cation or anion exchange groups, or embedded polar functionalities. Examples of suitable R functionalizing groups include C₁-C₂₀ alkyl such as octyl (C₈) and octadecyl (C₁₈); alkaryl, e.g., C₁-C₄-phenyl; cyanoalkyl groups, e.g., cyanopropyl; diol groups, e.g., propyldiol; amino groups, e.g., aminopropyl; and embedded polar functionalities, e.g., carbamate functionalities such as disclosed in U. S. Patent No. 5,374,755. In a preferred embodiment, the surface modifier may be a halopolyorganosilane, such as octyldimethylchlorosilane or octadecyldimethylchlorosilane. Advantageously, R is octyl or octadecyl.

Polymer coatings are known in the literature and may be provided generally by polymerization or polycondensation of physisorbed monomers onto the surface without chemical bonding of the polymer layer to the support (type I), polymerization or polycondensation of physisorbed monomers onto the surface with chemical bonding of the polymer layer to the support (type II), immobilization of physisorbed prepolymers to the support (type III), and chemisorption of presynthesized polymers onto the surface of the support (type IV). *see, e.g.,* Hanson et al., J. Chromat. A656 (1993) 369-380.

The porous hybrid particles have a wide variety of end uses in the separation sciences, such as packing materials for chromatographic columns (wherein such columns will have extended lives), thin layer chromatographic (TLC) plates, filtration membranes, microtiter plates, and the like having a stationary phase which includes porous hybrid particles having a chromatographically-enhancing pore geometry. The stationary phase may be introduced by packing, coating, impregnation, etc., depending on the requirements of the particular device. In a particularly advantageous embodiment, the chromatographic device is a packed chromatographic column, e.g., HPLC column.

The present invention may be further illustrated by the following non-limiting examples describing the preparation of porous hybrid particles, and their use.

### EXAMPLE 1

802 g of tetraethoxysilane (3.87 mol) is mixed with 137.2 g of methyltriethoxysilane (0.774 mol), 400 mol of ethanol and 108.6 of 0.1 N hydrochloric acid (~6.03 mol of water) in a flask. The resulting solution is agitated and refluxed for 16 h in an atmoshpere of argon. After the ethanol in the solution is distilled off the distillation residue is heated at 140°C for 1.5 h in the atmosphere of argon and further heated at the same temperature under reduced pressure for another 1.5 h to remove any volatile species. The thus-prepared polymethylethoxysiloxane is a colorless viscous liquid. By using a similar procedure, other polyorganoalkoxysiloxanes are prepared. Product g was prepared from 1000 g of tetraethoxysilane (4.80 mol) and 851 g of 1,2-bis(triethoxysilyl)ethane (2.40 mol). The contents of the starting materials used to prepare these products are summarized in Table 1.

**TABLE 1**

| Product | R² | Molar ratio of organoalkoxysilane to tetraalkoxysilane in starting mixture | Molar ratio of H₂O to the sum of organoalkoxysilane and tetraalkoxysilane in starting mixture |
|---|---|---|---|
| a | methyl | 0.20 | 1.30 |
| b | methyl | 0.20 | 1.25 |
| c | methyl | 0.35 | 1.25 |
| d | methyl | 0.50 | 1.25 |
| e | ethyl | 0.25 | 1.20 |
| f | phenyl | 0.25 | 1.25 |
| g | ethylene | 0.50 | 1.25 |
| | bridged | | |

A mixture of 20 g of TRITON X-100 surfactant, 240 ml of ethanol and 960 ml of deionized water is heated at 55°C for 0.5 h, leading to a solution. Under rapid agitation, 240 g of polymethylethoxysiloxane (product a in Table 1) is added into the above solution and emulsified in it. Thereafter, 150 ml of 30% NH₄OH is added into the emulsion to gel the emulsion beads. Suspended in the solution, the gelled product is stirred at 55°C for 16 h, then filtered and washed with water and methanol repeatedly, and finally dried at 100°C under reduced pressure for 16 h. SiO₂/[R²SiO_{1.5}]ₙ materials derived from other polyorganoalkoxysiloxanes are prepared using a similar procedure described above. The specific surface areas, specific pore volumes and the average pore diameters of these materials are measured using the multi-point N₂ sorption method and the data are listed in Table 2.

**TABLE 2**

| Product | R² | Molar ratio of organosiloxane to SiO₂ in products | Specific surface area (m²/g) | Pore Volume (cc/g) | Avg Pore Diameter ("APD") (Å) |
|---|---|---|---|---|---|
| a | methyl | 0.2 | 325 | 0.45 | 49 |
| | | | | | |
| b | methyl | 0.5 | 502 | 0.43 | 36 |
| c | ethyl | 0.25 | 743 | 0.98 | 56 |
| d | methyl | 0.25 | 616 | 0.52 | 43 |

### EXAMPLE 2

A mixture of of 24 g of TRITON X-45 surfactant, 285 ml of ethanol and 1200 ml of deionized water is heated at 55°C for 0.5 h, leading to a white liquid. Under rapid agitation, a solution containing 60 ml of toluene in 249 g of polymethylethoxysiloxane (product d in Table 1) is added into the ethanol/water/TRITON X-45 mixture, and emulsified in the aqueous phase. Thereafter, 190 ml of 30% NH₄OH is added into the emulsion to gel the emulsion beads. Suspended in the solution, the gelled product is stirred at 55°C for 16 h. SiO₂/[R²SiO_{1.5}]ₙ materials derived from other polyorganoalkoxysiloxanes are also prepared using a similar procedure described above. The specific surface areas, specific pore volumes and the average pore diameters of these materials are measured using the multi-point N₂ sorption method and the data are presented in Table 3.

**TABLE 3**

| Product | R² | Molar ratio of methylsiloxane to SiO₂ in products | Ratio of toluene to Polymethylethoxy-siloxane (ml/g) | Specific surface area (m /g) | Pore Volume (cc/g) | Avg. Pore Diameter (Å) |
|---|---|---|---|---|---|---|
| a | methyl | 0.5 | 0.24 | 689 | 0.93 | 43 |
| b | methyl | 0.5 | 0.12 | 644 | 0.73 | 39 |
| c | methyl | 0.35 | 0.12 | 466 | 0.81 | 60 |
| d | methyl | 0.2 | 0.12 | 358 | 0.72 | 72 |

### EXAMPLE 3

A mixture of 11.8 g of Triton X-45 surfactant, 7.8 g of Triton X-100 surfactant, 232 ml ethanol and 980 ml deionized water is heated at 50°C, leading to a white liquid. Under rapid agitation, a solution containing 24 ml toluene in 203 g poly(ethylene-bridged)ethoxysiloxane (product g in Table 1) is added to the ethanol/water/triton mixture and emulsified in the aqueous phase. Thereafter, 154 ml of 30% NH₄OH is added into the emulsion to gel to gel the beads. Suspended in the solution, the gelled product is stirred at 55°C for 16 h, then filtered and washed with water and methanol repeatedly, and finally dried at 100°C under reduced pressure for 16 h. The resulting product had a specific surface area of 869 m²/g, pore volume of 0.80 cc/g, and average pore diameter of 34 Å.

### EXAMPLE 4

13 g of product a from Table 2 is mixed with 130 ml of 0.1 M tris(hydroxymethyl)aminomethane in water, yielding a slurry. The pH of the slurry is adjusted to 8 by adding concentrated acetic acid. The resultant slurry is then enclosed in a stainless autoclave and heated at 143°C for 20 h. After the autoclave cools down to room temperature the product is filtered and washed repeatedly using water and acetone, and then dried at 100°C under reduced pressure for 16 h. Hydrothermal treatment of other hybrid silica materials is also carried out using a similar procedure described above. The specific surface areas, specific pore volumes and the average pore diameters of these materials are measured using the multi-point N₂ sorption method and the data are listed in Table 4.

**TABLE 4**

| Product | Composition of the Hybrid Materials | N₂ sorption Data (as-prepared) | | | N₂ sorption Data (after hydrothermal treatment) | | | Conditions of Hydrothermal Treatment | | |
|---|---|---|---|---|---|---|---|---|---|---|
| | | SSA (m²/ g) | SPV (cc/g) | APD (Å) | SSA (m² /g) | SPV (cc/g) | APD (Å) | pH | T (°C) | t (h) |
| a | SiO₂/(CH₃SiO_{1.5})_{0.2} | 325 | 0.45 | 49 | | | | | | |
| a1 | | | | | 130 | 0.41 | 103 | 8.0 | 143 | 20 |
| b | SiO₂/(CH₃SiO_{1.5})_{0.2} | 358 | 0.72 | 72 | | | | | | |
| b1 | | | | | 151 | 0.71 | 159 | 8.1 | 143 | 20 |
| b2 | | | | | 135 | 0.67 | 173 | 8.4 | 155 | 20 |
| c | SiO₂/(CH₃SiO_{1.5})_{0.35} | 466 | 0.81 | 60 | | | | | | |
| c1 | | | | | 160 | 0.72 | 139 | 8.0 | 143 | 20 |
| d | SiO₂/(CH₃SiO_{1.5})_{0.5} | 689 | 0.93 | 43 | | | | | | |
| d1 | | | | | 225 | 0.90 | 123 | 8.30 | 143 | 20 |
| d | SiO₂/(CH₃SiO_{1.5})_{0.5} | 729 | 0.76 | 38 | | | | | | |
| d1 | | | | | 188 | 0.70 | 125 | 8.30 | 143 | 20 |
| d2 | | | | | 155 | 0.69 | 148 | 8.75 | 148 | 20 |
| d3 | | | | | 125 | 0.62 | 168 | 9.0 | 163 | 20 |
| e | SiO₂/(C₂H₅SiO_{1.5})_{0.25} | 743 | 0.98 | 56 | | | | | | |
| e1 | | | | | 267 | 0.94 | 139 | 8.28 | 143 | 20 |
| f | SiO₂/(C₆H₅SiO_{1.5})_{0.25} | 616 | 0.52 | 43 | | | | | | |
| f1 | | | | | 327 | 0.52 | 80 | 8.43 | 143 | 20 |
| g | SiO₂/[C₂H₄(SiO_{1.5})₂]_{0.5} | 869 | 0.80 | 34 | 287 | 0.79 | 111 | 9.0 | 165 | 20 |

### EXAMPLE 5

The particles of hybrid silica prepared according to Example 3 are sized to ~5 µm. The surfaces of the particles are modified with octadecyldimethylchlorosilane (ODS) and trimethylchlorosilane as follows, 4.5 g ODS and 1.32 g imidazole are added to a mixture of 8 g of hybrid silica (product a1 in Table 4) in 90 ml of toluene and the resultant mixture is refluxed for 2 h. The modified hybrid silica particles are filtered and washed successively with water, toluene, 1:1 acetone/water and acetone, and then dried at 100°C under reduced pressure for 16 h. The surface coverage of octadecyl groups is determined to be 2.74 µmol/m² based on elemental analyses.

Trimethylchlorosilane (1.65 g) and imidazole (1.32 g) are added to a mixture of the above ODS-modified hybrid silica in 65 ml of toluene and the resultant mixture is refluxed for 4 h. The thus-modified hybrid silica particles are filtered and washed successively with water, toluene, 1:1 acetone/water and acetone, and then dried at 100°C under pressure for 16 h. Surface modification of other hybrid silica is also carried out using a similar procedure described above. The specific surface area, specific pore volume, ODS surface coverage and average pore diameter data for these materials are listed in Table 5.

**TABLE 5**

| Product | Composition of the base hybrid silica | Specific surface area (m² /g) | Pore Volume (cc/g) | Avg. Pore Diameter (Å) | Surface coverage of ODS (µmol/m²) |
|---|---|---|---|---|---|
| a | SiO₂/(CH₃SiO_{1.5})_{0.2} | 130 | 0.41 | 103 | 2.73 |
| b | SiO₂/(CH₃SiO_{1.5})_{0.35} | 173 | 0.73 | 140 | 2.50 |
| c | SiO₂/(CH₃SiO_{1.5})_{0.5} | 177 | 0.61 | 113 | 2.18 |
| d | SiO₂/(CH₃SiO_{1.5})_{0.5} | 225 | 0.90 | 123 | 2.15 |

The above derivatized hybrid silica is used for separation of a mixture of neutral, polar and basic compounds listed in Table 6. The chromatographic columns are packed using a slurry packing technique, and the analysis conditions are shown in Table 7.

**TABLE 6**

| | Product b in Table 5 | Product c in Table 5 | Product d in Table 5 |
|---|---|---|---|
| k' of Acenaphthene | 10.02 | 11.35 | 13.40 |
| Relative Retention (r) | | | |
| Propranolol/Acenaphthene | 0.157 | 0.149 | 0.139 |
| Butyl paraben/Acenaphthene | 0.226 | 0.216 | 0.223 |
| Dipropyl Phthalate / Acenaphthene | 0.411 | 0.405 | 0.403 |
| Naphthalene/Acenaphthene | 0.437 | 0.436 | 0.437 |
| Amitriptyline /Acenaphthene | 1.483 | 1.525 | 1.395 |
| USP Tailing Factor | | | |
| Amitriptyline | 1.06 | 1.41 | 1.41 |
| Propranolol | 0.98 | 0.98 | 0.98 |

**TABLE 7**

| Temperature | 23 °C |
|---|---|
| Mobile phase | 35% v/v 20.0 mM K₂HPO₄ pH 7.00/65% methanol |
| Flow rate | 1.4 ml/min |

The hydrolytic stability of the columns packed by the hybrid silica shown in Table 5, as well as some commercial columns based on silica gel bonded with octadecyl groups are evaluated using the following procedure. The columns are placed in a 50°C water bath and flushed with a solution of 50 mM triethylamine buffer (pH 10) in water. Acenaphthene is injected at a flow rate of 1 ml/min at predetermined intervals and the theoretical plate numbers are recorded.

The lifetime of the column is defined as the time when the plate number drops to 50% of the initial value. The results are shown in Table 8.

**TABLE 8**

| Column | Lifetime (h) |
|---|---|
| Commercial Column A (C₁₈ type) | 8 |
| Commercial Column B (C₁₈ type) | 11 |
| Commercial Column C (C₁₈ type) | 16 |
| Commercial Column D (C₁₈ type) | 19 |
| Commercial Column E (C₁₈ type) | 30 |
| Commercial Column F (C₁₈ type) | 34 |
| Packing Material of Product c in Table 5 | 48 |
| Packing Material of Product d in Table 5 | 50 |
| Packing Material of Product a in Table 5 | 51 |

It can be seen that the durability of the packing materials based on the hybrid silica is greatly improved over the commercial silica gels.

## Claims

1. A porous hybrid material comprising porous hybrid particles obtainable by a method comprising the steps of:
a) prepolymerizing an organoalkoxysilane and a tetraalkoxysilane to produce a polyorganoalkoxysiloxane;
b) preparing an aqueous surfactant-containing suspension of the polyorganoalkoxysiloxane;
c) gelling the suspension in the presence of a base catalyst so as to produce porous particles; and
d) modifying the pore structure of the porous particles by hydrothermal treatment;
wherein the porous hybrid particles have the formula SiO₂/(R²ₚR⁴_{q}SiOₜ)ₙ or SiO₂/[R⁶(R²ᵣSiOₜ)ₘ]ₙ, wherein R² and R⁴ are independently C₁ - C₁₈ alkyl or aryl moiety, which may additionally be substituted with alkyl, aryl, cyano, amino, diol, nitro, and ion exchange or embedded polar functionalities, R⁶ is a substituted or unsubstituted C₁ - C₁₈ alkylene, alkenylene, alkynylene or arylene moiety bridging two or more silicon atoms, p and q are 0, 1 or 2, provided that p + q = 1 or 2, and that when p + q = 1, t = 1.5, and when p + q = 2, t = 1; r is 0 or 1, provided that when r = 0, t = 1.5, and when r = 1, t = 1; m is an integer greater than or equal to 2, and n is a number from 0.1 to 1.

2. The porous hybrid material of claim 1 wherein n is a number from 0.20 to 0.50.

3. The porous hybrid material of claim 1 wherein said prepolymerization step comprises hydrolyzing and condensing a mixture of an organotrialkoxysilane and a tetraalkoxysilane in the presence of an acid catalyst to produce said polyorganoalkoxysiloxane.

4. The porous hybrid material of claim 1 wherein the molar ratio of said organoalkoxysilane and tetraalkoxysilane is from 0.5:1 to 0.2:1.

5. The porous hybrid material of claim 1 wherein said suspension further comprises a porogen.

6. The porous hybrid material of claim 5 wherein said porogen is toluene.

7. The porous hybrid material of claim 1 wherein said base catalyst is free of alkali or alkaline earth metal cations.

8. The porous hybrid material of claim 1 wherein said base catalyst is ammonium hydroxide.

9. The porous hybrid material of claim 1 wherein said tetraalkoxysilane has the formula Si(OR¹)₄, where R¹ is a C₁ - C₃ alkyl moiety.

10. The porous hybrid material of claim 1 wherein said tetraalkoxysilane is selected from the group consisting of tetramethoxysilane and tetraethoxysilane.

11. The porous hybrid material of claim 1 wherein said organoalkoxysilane has the formula R²Si(OR¹)₃ or R⁶[Si(OR¹)₃]ₘ where R² is a C₁ - C₁₈ aliphatic or aromatic moiety, R¹ is a C₁ - C₄ alkyl moiety, R⁶ is a C₁ - C₁₈ alkylene, alkenylene, alkynylene or arylene moiety bridging two or more silicon atoms, and m is an integer greater than or equal to two.

12. The porous hybrid material of claim 11 wherein R² is methyl, ethyl or phenyl, and R¹ is ethyl; or R⁶ is a bridging ethylene group, m = 2, and R¹ is ethyl.

13. The porous hybrid material of claim 1, wherein said particles have a mean particle size of 0.5 to 100 µm, said particles have a specific surface area of 50 to 800 m²/g, said particles have specific pore volumes of 0.25 to 1.5 cm³/g, and said particles have an average pore diameter of 50 to 500 Å.

14. The porous hybrid material of claim 1 wherein said surfactant is an alkylphenoxypolyethoxyethanol.

15. The porous hybrid material of any one of claims 1 to 14 further comprising the step of surface modifying said porous particles with a surface modifier having the formula Zₐ(R')_{b}Si-R, where Z = Cl, Br, I, C₁ - C₅ alkoxy, dialkylamino or trifluoromethanesulfonate; a and b are each an integer from 0 to 3 provided that a + b = 3; R' is a C₁ - C₆ straight, cyclic or branched alkyl group, and R is a functionalizing group.

16. The porous hybrid material of claim 15 wherein R' is selected from the group consisting of methyl, ethyl, propyl, isopropyl, butyl, t-butyl, sec-butyl, pentyl, isopentyl, hexyl and cyclohexyl.

17. The porous hybrid material of claim 15, wherein said functionalizing group R is selected from the group consisting of alkyl, aryl, cyano, amino, diol, nitro, a cation or anion exchange group, or an embedded polar functionality.

18. The porous hybrid material of claim 15 wherein said functionalizing group R is a C₁ - C₂₀ alkyl group.

19. The porous hybrid material of claim 15 wherein said surface modifier is selected from the group consisting of octyldimethylchlorosilane and octadecyldimethylchlorosilane.

20. The porous hybrid material of claim 15 wherein any free silanol groups remaining from said surface modification procedure are endcapped.

21. A separations device having a stationary phase comprising the porous hybrid material of any one of claims 1 to 20.

22. The separations device of claim 21, wherein said device is selected from the group consisting of chromatographic columns, cartridges, filtration membranes, sample cleanup devices, and microtiter plates.

## Patentansprüche

1. Poröses Hybridmaterial, umfassend poröse Hybridpartikel, die durch ein Verfahren erhältlich sind, das die Schritte:
a) Präpolymerisieren eines Organoalkoxysilans und eines Tetraalkoxysilans, um ein Polyorganoalkoxysiloxan herzustellen,
b) Herstellen einer wässrigen tensidhaltigen Suspension des Polyorganoalkoxysiloxans,
c) Gelieren der Suspension in der Gegenwart eines Basenkatalysators, um poröse Partikel herzustellen, und
d) Modifizieren der Porenstruktur der porösen Partikel durch Hydrothermalbehandlung
umfasst, wobei die porösen Hybridpartikel die Formel SiO₂/(R²ₚR⁴_{q}SiOₜ)ₙ oder SiO₂/[R⁶(R²ᵣSiOₜ)ₘ]ₙ aufweisen, worin R² und R⁴ unabhängig voneinander eine C₁-C₁₈-Alkyl- oder Arylgruppe sind, die zusätzlich mit Alkyl-, Aryl-, Cyan-, Amino-, Diol-, Nitro- und Ionenaustauscher- oder eingebetteten polaren Funktionalitäten substituiert sein kann, R⁶ eine substituierte oder nicht substituierte C₁-C₁₈-Alkylen-, Alkenylen-, Alkinylen- oder Arylengruppe ist, die zwei oder mehrere Siliziumatome verbrückt, p und q den Wert 0, 1 oder 2 aufweisen, mit der Maßgabe, dass p + q 1 oder 2 ist und dass, wenn p + q 1 ist, t den Wert 1,5 aufweist und, wenn p + q 2 ist, t den Wert 1 aufweist, r den Wert 0 oder 1 aufweist, mit der Maßgabe, dass, wenn r den Wert 0 aufweist, t den Wert 1,5 aufweist und, wenn r den Wert 1 aufweist, t den Wert 1 aufweist, m eine ganze Zahl größer als oder gleich 2 ist und n eine Zahl von 0,1 1 bis 1 ist.

2. Poröses Hybridmaterial nach Anspruch 1, wobei n eine Zahl von 0,20 bis 0,50 ist.

3. Poröses Hybridmaterial nach Anspruch 1, wobei der Präpolymerisationsschritt ein Hydrolysieren und Kondensieren eines Gemisches eines Organotrialkoxysilans und eines Tetraalkoxysilans in der Gegenwart eines Säurekatalysators umfasst, um das Polyorganoalkoxysiloxan herzustellen.

4. Poröses Hybridmaterial nach Anspruch 1, wobei das molare Verhältnis des Organoalkoxysilans und Tetraalkoxysilans 0,5:1 bis 0,2:1 beträgt.

5. Poröses Hybridmaterial nach Anspruch 1, wobei die Suspension ferner ein Porogen umfasst.

6. Poröses Hybridmaterial nach Anspruch 5, wobei das Porogen Toluol ist.

7. Poröses Hybridmaterial nach Anspruch 1, wobei der Basenkatalysator frei von Alkali- oder Erdalkalimetallkationen ist.

8. Poröses Hybridmaterial nach Anspruch 1, wobei der Basenkatalysator Ammoniumhydroxid ist.

9. Poröses Hybridmaterial nach Anspruch 1, wobei das Tetraalkoxysilan die Formel Si(OR¹)₄ aufweist, worin R¹ eine C₁-C₃-Alkylgruppe ist.

10. Poröses Hybridmaterial nach Anspruch 1, wobei das Tetraalkoxysilan ausgewählt ist aus der Gruppe, bestehend aus Tetramethoxysilan und Tetraethoxysilan.

11. Poröses Hybridmaterial nach Anspruch 1, wobei das Organoalkoxysilan die Formel R²Si(OR¹)₃ oder R⁶[Si(OR¹)₃]ₘ aufweist, worin R² eine C₁-C₁₈-aliphatische oder aromatische Gruppe ist, R¹ eine C₁-C₄-Alkylgruppe ist, R⁶ eine C₁-C₁₈-Alkylen-, Alkenylen-, Alkinylen- oder Arylengruppe ist, die zwei oder mehrere Siliziumatome verbrückt, und m eine ganze Zahl größer als oder gleich 2 ist.

12. Poröses Hybridmaterial nach Anspruch 11, wobei R² eine Methyl-, Ethyl- oder Phenylgruppe ist und R¹ eine Ethylgruppe ist, oder R⁶ eine verbrückende Ethylengruppe ist, m den Wert 2 aufweist und R¹ eine Ethylgruppe ist.

13. Poröses Hybridmaterial nach Anspruch 1, wobei die Partikel eine mittlere Partikelgröße von 0,5 bis 100 µm aufweisen, die Partikel eine spezifische Oberfläche von 50 bis 800 m²/g aufweisen, die Partikel spezifische Porenvolumina von 0,25 bis 1,5 cm³/g aufweisen und die Partikel einen durchschnittlichen Porendurchmesser von 50 bis 500 Å aufweisen.

14. Poröses Hybridmaterial nach Anspruch 1, wobei das Tensid ein Alkylphenoxypolyethoxyethanol ist.

15. Poröses Hybridmaterial nach einem jeglichen der Ansprüche 1 bis 14, das ferner den Schritt einer Oberflächenmodifizierung der porösen Partikel mit einem Oberflächenmodifizierungsmittel der Formel Zₐ(R')_{b}Si-R umfasst, worin Z ein Cl-, Br-, I-Atom, eine C₁-C₅-Alkoxy-, Dialkylamino- oder Trifluormethansulfonatgruppe ist, a und b jeweils eine ganze Zahl von 0 bis 3 sind, mit der Maßgabe, dass a + b 3 ist, R' eine geradkettige, cyclische oder verzweigte C₁-C₆-Alkylgruppe ist und R eine funktionalisierende Gruppe ist.

16. Poröses Hybridmaterial nach Anspruch 15, wobei R' ausgewählt ist aus der Gruppe, bestehend aus Methyl-, Ethyl-, Propyl-, Isopropyl-, Butyl-, t-Butyl-, sec-Butyl-, Pentyl-, Isopentyl-, Hexyl- und Cyclohexylgruppe.

17. Poröses Hybridmaterial nach Anspruch 15, wobei die funktionalisierende Gruppe R ausgewählt ist aus der Gruppe, bestehend aus Alkyl-, Aryl-, Cyan-, Amino-, Diol-, Nitro-, einer Kationen- oder Anionenaustauschergruppe oder einer eingebetteten polaren Funktionalität.

18. Poröses Hybridmaterial nach Anspruch 15, wobei die funktionalisierende Gruppe R eine C₁-C₂₀-Alkylgruppe ist.

19. Poröses Hybridmaterial nach Anspruch 15, wobei das Oberflächenmodifizierungsmittel ausgewählt ist aus der Gruppe, bestehend aus Octyldimethylchlorosilan und Octadecyldimethylchlorosilan.

20. Poröses Hybridmaterial nach Anspruch 15, wobei jegliche freie Silanolgruppen, die aus dem Oberflächenmodifizierungsverfahren verbleiben, endcapped werden.

21. Auftrennungsvorrichtung mit einer stationären Phase, die das poröse Hybridmaterial nach einem jeglichen der Ansprüche 1 bis 20 umfasst.

22. Auftrennungsvorrichtung nach Anspruch 21, wobei die Vorrichtung ausgewählt ist aus der Gruppe, bestehend aus chromatographischen Säulen, Kartuschen, Filtrationsmembranen, Probenaufreinigungsvorrichtungen und Mikrotiterplatten.

## Revendications

1. Matériau hybride poreux comprenant des particules hybrides poreuses pouvant être obtenues par un procédé comprenant les étapes de:
a) prépolymérisation d'un organoalcoxysilane et d'un tétraalcoxysilane pour produire un polyorganoalcoxysiloxane;
b) préparation d'une suspension aqueuse du polyorganoalcoxysiloxane contenant un tensioactif;
c) gélification de la suspension en présence d'un catalyseur basique de manière à produire des particules poreuses; et
d) modification de la structure des pores des particules poreuses par traitement hydrothermique;
tandis que les particules hybrides poreuses ont la formule SiO_{2/}(R²ₚR⁴_{q}SiOₜ)ₙ ou SiO_{2/}[R⁶(R²ᵣSiOₜ)ₘ]ₙ, où R² et R⁴ sont indépendamment une portion alkyle en C₁-C₁₈ ou aryle, qui peut en outre être substituée par des groupes alkyle, aryle, cyano, amino, diol, nitro, et des fonctionnalités d'échange d'ions ou polaires incluses, R⁶ est une portion alkylène en C₁-C₁₈, alcénylène, alcynylène ou arylène, substituée ou non-substituée, pontant deux ou plus de deux atomes de silicium, p et q sont 0, 1 ou 2, à condition que p + q = 1 ou 2, et que quand p + q = 1, t = 1,5, et quand p + q = 2, t = 1; r est 0 ou 1, à condition que quand r = 0, t = 1,5, et quand r = 1, t = 1; m est un entier supérieur ou égal à 2, et n est un nombre de 0,1 à 1.

2. Matériau hybride poreux selon la revendication 1, dans lequel n est un nombre de 0,20 à 0,50.

3. Matériau hybride poreux selon la revendication 1, dans lequel ladite étape de prépolymérisation comprend l'hydrolyse et la condensation d'un mélange d'un organotrialcoxysilane et d'un tétraalcoxysilane en présence d'un catalyseur acide pour produire ledit polyorganoalcoxysiloxane.

4. Matériau hybride poreux selon la revendication 1, dans lequel le rapport molaire du dit organoalcoxysilane au dit tétraalcoxysilane est de 0,5:1 à 0,2:1.

5. Matériau hybride poreux selon la revendication 1, dans lequel ladite suspension comprend en outre un agent porogène.

6. Matériau hybride poreux selon la revendication 5, dans lequel ledit agent porogène est le toluène.

7. Matériau hybride poreux selon la revendication 1, dans lequel ledit catalyseur basique est exempt de cations de métal alcalin ou alcalinoterreux.

8. Matériau hybride poreux selon la revendication 1, dans lequel ledit catalyseur basique est l'hydroxyde d'ammonium.

9. Matériau hybride poreux selon la revendication 1, dans lequel ledit tétraalcoxysilane a la formule Si(OR¹)₄, où R¹ est une portion alkyle en C₁-C₃.

10. Matériau hybride poreux selon la revendication 1, dans lequel ledit tétraalcoxysilane est choisi dans le groupe consistant en tétraméthoxysilane et tétraéthoxysilane.

11. Matériau hybride poreux selon la revendication 1, dans lequel ledit organoalcoxysilane a la formule R²Si(OR¹)₃ ou R⁶[Si(OR¹)₃]ₘ où R² est une portion aliphatique en C₁-C₁₈ ou aromatique, R¹ est une portion alkyle en C₁-C₄, R⁶ est une portion alkylène en C₁-C₁₈, alcénylène, alcynylène ou arylène pontant deux ou plus de deux atomes de silicium, et m est un entier supérieur ou égal à deux.

12. Matériau hybride poreux selon la revendication 11, dans lequel R² est méthyle, éthyle ou phényle, et R¹ est éthyle; ou R⁶ est un groupe éthylène pontant, m = 2, et R¹ est éthyle.

13. Matériau hybride poreux selon la revendication 1, dans lequel lesdites particules ont une taille moyenne de particule de 0,5 à 100µm, lesdites particules ont une aire de surface spécifique de 50 à 800 m²/g, lesdites particules ont des volumes de pores spécifiques de 0,25 à 1,5 cm³/g et lesdites particules ont un diamètre moyen des pores de 50 à 500 Å.

14. Matériau hybride poreux selon la revendication 1, dans lequel ledit tensioactif est un alkylphénoxypolyhétoxyéthanol.

15. Matériau hybride poreux selon l'une quelconque des revendications 1 à 14, comprenant en outre l'étape de modification de la surface des dites particules poreuses avec un agent modificateur de surface ayant la formule Zₐ(R')_{b}Si-R, où Z = Cl, Br, I, alcoxy en C₁-C₅, dialkylamino ou trifluorométhanesulfonate; a et b sont chacun un entier de 0 à 3 à condition que a + b = 3; R' est un groupe alkyle linéaire, cyclique ou ramifié en C₁-C₆ et R est un groupe fonctionnalisant.

16. Matériau hybride poreux selon la revendication 15, dans lequel R' est choisi dans le groupe consistant en méthyle, éthyle, propyle, isopropyle, butyle, tert-butyle, sec-butyle, pentyle, isopentyle, hexyle et cyclohexyle.

17. Matériau hybride poreux selon la revendication 15, dans lequel ledit groupe fonctionnalisant R est choisi dans le groupe consistant en alkyle, aryle, cyano, amino, diol, nitro, un groupe d'échange de cations ou d'anions, ou une fonctionnalité polaire incluse.

18. Matériau hybride poreux selon la revendication 15, dans lequel ledit groupe fonctionnalisant R est un groupe alkyle en C₁-C₂₀.

19. Matériau hybride poreux selon la revendication 15, dans lequel ledit modificateur de surface est choisi dans le groupe consistant en octyldiméthylchlorosilane et octadécyldiméthylchlorosilane.

20. Matériau hybride poreux selon la revendication 15, dans lequel tous les groupes silanol libres éventuels restant après ledit mode opératoire de modification de surface sont coiffés à leur extrémité.

21. Dispositif pour des séparations, ayant une phase stationnaire comprenant le matériau hybride poreux selon l'une quelconque des revendications 1 à 20.

22. Dispositif pour des séparations selon la revendication 21, dans lequel ledit dispositif est choisi dans le groupe consistant en colonnes chromatographiques, cartouches, membranes de filtration, dispositifs de nettoyage d'échantillons, et plaques de microtitrage.
